# EUROPÄISCHE PATENTSCHRIFT

(11) **EP 4 455 507 B1**
(45) Veröffentlichungstag und Bekanntmachung des Hinweises auf die Patenterteilung: **03.12.2025**
(21) Anmeldenummer: 24163182.9
(22) Anmeldetag: 13.03.2024
(51) Int. Cl.: F16G 1/10, F16G 1/12, B65G 43/02

(54) **ANTRIEBSRIEMEN MIT SIGNALLEITUNGSELEMENT**
DRIVE BELT WITH SIGNAL LINE ELEMENT
COURROIE D'ENTRAÎNEMENT DOTÉE D'UN ÉLÉMENT DE LIGNE DE SIGNAL

(30) Priorität: 24.04.2023 DE 102023203738
(43) Veröffentlichungstag der Anmeldung: 30.10.2024
(73) Patentinhaber: ContiTech Deutschland GmbH, 30175 Hannover (DE)
(72) Erfinder: Kneer, Janosch, 30419 Hannover (DE); Schleuniger, Juerg, 30419 Hannover (DE); Kegel, Isabell, 30419 Hannover (DE); Toguem Fokoua, Stéphane, 30419 Hannover (DE); Benz, Nicolai, 30419 Hannover (DE)
(74) Vertreter: Preusser, Andrea

(56) Entgegenhaltungen:
- EP-B1- 3 513 093
- WO-A1-2016/002899
- JP-A- 2021 073 648

## Beschreibung

Die vorliegende Erfindung betrifft einen Antriebsriemen mit den Merkmalen des Anspruchs 1. Ferner betrifft die Erfindung einen Linearantrieb mit einem solchen Antriebsriemen und eine Fördervorrichtung mit einem solchen Linearantrieb.

Antriebsriemen werden in vielen Anwendungsbereichen zum Antreiben und Übertragen von Kräften in Maschinen, Transportmitteln, Fahrzeugen, etc. eingesetzt, sowohl als umlaufende Antriebsriemen in einem Zugriementrieb als auch als Antriebsriemen endlicher Länge in einem Linearantrieb oder in einer Aufzugsanlage.

Insbesondere bei Linearantrieben werden Teile der jeweiligen Vorrichtung über die darin verwendeten Riemen bewegt, beispielsweise bei einem in mehrere Richtungen bewegten Schlitten einer Arbeitsmaschine (z.B. einer Fräsmaschine oder einem 3D-Drucker).

Bei solchen Linearantrieben werden zur Übertragung von Mess- und/oder Steuersignalen zwischen dem bewegten Teil der Arbeitsmaschine und dem Antrieb bzw. der zentralen Steuerungseinrichtung Signalleitungen üblicherweise in einer Energieführungskette oder Schleppkette, häufig mit dem Handelsnamen "Kabelschlepp" bezeichnet, mitgeführt. Eine solche mit dem bewegten Teil der Arbeitsmaschine mitfahrende Energieführungskette benötigt entsprechenden Bauraum und muss gewartet werden.

Alternativ können verschiedenste Ausführungsformen von Schleifkontakten, beispielsweise in Form von stromführenden Schienen zum Einsatz kommen. Schleifkontakte sind gegenüber Verschmutzungen besonders empfindlich, weshalb die Wartung der Schleifkontakte für eine zuverlässige Strom- und bzw. oder Signalübertragung sehr aufwändig und teuer ist.

Aus der EP 3 462 055 A1 ist ferner ein Antriebsriemen bekannt, bei dem Mess- und/oder Steuersignale über die in dem Riemen eingebetteten metallischen Zugträger übertragen werden können. Da die Zugträger nicht unmittelbar zugänglich sind, gestaltet sich ihre elektrische Kontaktierung z.B. mittels einer Kabelklemme aufwendig, da jeder einzelne Zugträger zunächst in Handarbeit von dem elastomeren Material des Antriebsriemens befreit werden muss.

In der EP 2 157 334 A1 wird dieses Problem zumindest teilweise dadurch umgangen, dass Signale mittels Induktion in die Zugträger eingekoppelt werden. Zur Realisierung einer ausreichend zuverlässigen induktiven Kopplung zwischen einer Steuerungseinrichtung und den Zugträgern sind wiederum spezielle elektronische Bauteile notwendig, die den konstruktiven Aufbau der Arbeitsmaschine verkomplizieren.

Die Dokumente WO 2016/002899 A1, EP 3 513 093 B1 und JP 2021 073648 A betreffen Antriebsriemen.

Aufgabe der vorliegenden Erfindung ist es daher einen Antriebsriemen der eingangs genannten Art insbesondere für einen Linearantrieb bereitzustellen, der eine leicht zu realisierende und zuverlässige Übertragung von Mess- und/oder Steuersignalen ermöglicht. Insbesondere soll ein Antriebsriemen bereitgestellt werden, mit dem die Nachteile des Standes der Technik zumindest teilweise verringert bzw. vermieden werden können.

Diese Aufgabe wird durch einen Antriebsriemen mit den Merkmalen des Anspruchs 1 gelöst. Bevorzugte Merkmale sind Gegenstand der abhängigen Ansprüche.

Weitere Vorteile und Merkmale sind der allgemeinen Beschreibung sowie den Ausführungsbeispielen zu entnehmen.

Gegenstand der vorliegenden Erfindung ist auch ein Linearantrieb mit den Merkmalen des Anspruchs 9 sowie eine Fördervorrichtung mit den Merkmalen des Anspruchs 10.

Der erfindungsgemäße Antriebsriemen, insbesondere für einen Linearantrieb, enthält ein polymeres, insbesondere elastomeres Material insbesondere mit darin eingebetteten und sich in Längsrichtung des Riemens erstreckenden Zugträgern. Die Zugträger enthalten insbesondere zumindest ein Metall (z.B. Stahldrähte), zumindest ein Polymer (z.B. Aramid), Kohlenstofffasern und/oder Glasfasern. Der Antriebsriemen zeichnet sich durch ein insbesondere streifenförmiges Signalleitungselement aus, das insbesondere zur Übertragung von Mess- und/oder Steuersignalen ausgebildet ist. Das Signalleitungselement weist eine gedruckte Signalleiterstruktur mit zumindest einer sich in Längsrichtung des Riemens erstreckenden, insbesondere metallische Leiterbahn auf. Vorzugsweise ist die Signalleiterstruktur direkt auf dem Riemenrücken des Antriebsriemens oder auf einer an dem Riemenrücken des Antriebsriemens befestigten, insbesondere geklebten oder laminierten, flexiblen Trägerschicht des Signalleitungselements aufgedruckt ist. Als Riemenrücken wird die nicht kraftübertragende Seite des Antriebsriemens verstanden, die z.B. die den Keilen, Keilrippen, Zähnen oder anderen Kraftübertragungsmitteln abgewandte Seite des Antriebsriemens ist. Alternativ kann das Signalleitungselement mit oder ohne Trägerschicht, auf der die Signalleitungsstruktur aufgedruckt ist, auch in dem polymeren Material des Antriebsriemens eingebettet sein. Das Signalleitungselement weist ferner eine auf der gedruckten Signalleiterstruktur angeordnete, insbesondere gedruckte Isolationsschicht enthaltend ein dielektrisches Material auf. Ferner weist das Signalleitungselement eine auf der Isolationsschicht angeordnete Abschirmungsschicht enthaltend ein elektrisch leitfähiges Material auf, wobei die Abschirmungsschicht eine gedruckte leitfähige Abschirmungsstruktur enthält.

Vorzugsweise ist auf der Abschirmungsschicht eine insbesondere gedruckte Schutzschicht angeordnet.

Durch die gedruckte Signalleiterstruktur kann mit dem Signalleitungselement eine äußerst flache und kompakte Signalleitung zur Übertragung von Mess- und/oder Steuersignalen zwischen dem bewegten Teil einer Fördervorrichtung und dem Antrieb bzw. der zentralen Steuerungseinrichtung der Fördervorrichtung realisiert werden. Das Signalleitungselement ist dabei ausreichend flexibel und robust realisierbar, so dass das Signalleitungselement den auf den Antriebriemen wirkenden Belastungen standhält. Auf diese Weise kann das Signalleitungselement platzsparend unmittelbar an dem Antriebsriemen (z.B. am Riemenrücken) befestigt oder in den Antriebsriemen eingebettet werden, wodurch der für die Signalleitungen notwendige Bauraum minimiert wird.

Durch die Abschirmungsschicht können auf das System wirkende äußere Störsignale wirksam unterdrückt werden, wodurch eine zuverlässige Übertragung von Mess- und/oder Steuersignalen sichergestellt wird. Die Abschirmungsschicht bzw. eine darin enthaltene Abschirmungsstruktur ist durch die Isolationsschicht von der Signalleitungsstruktur isoliert, d.h. elektrisch nicht mit dieser verbunden.

Ein weiterer Vorteil des Signalleitungselements ist, dass dieser sich aufgrund seines simplen Aufbaus in einfacher Weise automatisiert in hoher Stückzahl produzieren lässt.

Für die Trägerschicht kommen grundsätzlich verschiedene Materialien in Betracht, sofern sie nicht leitfähig und flexibel sind. Vorzugsweise enthält das Material der Trägerschicht zumindest ein Polymer. Bevorzugt ist das Material der Trägerschicht ausgewählt aus der Gruppe bestehend aus Polyamid (PA), z.B. PA6, PA6.6, PA11, PA12, PA6.10, PA6.12, und / oder Copolyamide und / oder Polyester (PES) und / oder Rayon und / oder Polyethylenterephthalat (PET) und / oder Polyethylennaphthalat (PEN) und / oder Polybutylenterephthalat (PBT) und / oder Polycarbonat (PC) und / oder ungesättigtes Polyesterharz (UP) und / oder Poly(1,4-cyclohexandimethylenterephthalat) (PCDT) und / oder Polyvinylalkohol (PVAL) und / oder Polyoxibenzonaphtoat und / oder Polyvinylacetal (PVA) und / oder Polyetheretherketon (PEEK) und / oder Polyethylen-2,6-naphthalat (PEN) und / oder Polyphenylen und / oder Polyphenylenoxid (PPO) und / oder Polyphenylensulfid (PPS) und / oder Polphenylenether und / oder Polybenzoxazol (PBO) und / oder Polyoxadiazol (POD) und / oder Polyetherimid (PEI) und / oder m-Aramid und / oder p-Aramid und / oder Cellulose und / oder Papier und / oder Basalt und / oder Keramik und / oder Wolle und / oder Baumwolle und / oder Polypropylen und / oder Polyethylen und / oder Melamin und / oder modifizierte Viskose und / oder hochkristalline Polymerfasern und / oder Fluorpolymere, wie bspw. Fluorsilikon, Polytetrafluorethylen (PTFE) und Perfluorethylenpropylen (FEP), und / oder Fluor-Copolymere und / oder Styrol-Butadien-Kautschuk (SBR) und / oder Ethylen-Propylen-Dien-Kautschuk (EPDM).

Bevorzugt ist das Material der Trägerschicht ein thermoplastisches Polyurethan (TPU). TPU ist im Vergleich zu anderen Substraten besonders elastisch, dehnfähig, abriebfest und reißfest, beständig gegenüber Ölen und Schmierstoffen und hat ein geringes Gewicht. Ferner zeigt TPU eine gute Bedruckbarkeit und lässt sich gut mit anderen polymeren Materialien, aus denen der Riemen aufgebaut sein kann, verkleben (z.B. verschweißen).

Insbesondere weist die Trägerschicht eine Schichtdicke von 1 µm bis 500 µm, bevorzugt von 5 µm bis 250 µm, besonders bevorzugt von 10 µm bis 50 µm, auf. Auf diese Weise kann eine besonders kompakte Ausgestaltung des Sensorelements realisiert werden. Gleichzeitig kann das Gewicht des erfindungsgemäßen Sensorelements geringgehalten werden.

Für die zumindest eine Leiterbahn der Signalleitungsstruktur kommen grundsätzlich verschiedene anorganische Materialien (wie z.B. Metalle) und organische Materialien (wie z.B. leitfähige Polymere, Carbon, Graphit, Graphen etc.) sowie Kombinationen davon in Betracht, sofern sie leitfähig sind und sich (z.B. als Tinte oder Paste) mittels Druckverfahren verarbeiten lassen. Vorzugsweise beträgt die Dicke der zumindest einen Leiterbahn 1 nm bis 50 µm. Auf diese Weise kann eine besonders kompakte Ausgestaltung des Signalleitungselements realisiert werden. Besonders bevorzugt beträgt die Dicke der zumindest einen Leiterbahn 500 nm bis 15 µm, so dass die zumindest eine Leiterbahn mittels bewährter Druckverfahren prozesssicher hergestellt werden kann. Als Dicke der zumindest einen Leiterbahn wird hierbei die quer zur Schichtebene der Trägerschicht oder quer zur Riemenrückenaußenfläche gemessene Abmessung der Leiterbahn verstanden.

Für die Isolationsschicht kommen grundsätzlich verschiedene Materialien in Betracht, sofern sie nicht leitfähig (d.h. dielektrisch) sind. Vorzugsweise enthält das Material der Isolationsschicht zumindest ein Polymer. Beispielsweise kann ein vernetzbarer oder Lösemittel-basierter Lack oder ein Folienlaminat, bestehend aus einer geeigneten Folie sowie einer Haftschicht (chemisch-vernetzbare Schicht oder PSA-Kleber), z.B. PET-Folie, als Isolationsschicht verwendet werden. Eine Isolationsschicht kann hierbei besonders dünn und mittels Druckverfahren besonders effizient und prozesssicher realisiert werden. Vorzugsweise beträgt die Schichtdicke der Isolationsschicht 100 nm bis 800 µm, bevorzugt 1 µm bis 100 µm, besonders bevorzugt 1 µm bis 10 µm. Bevorzugt wird für die Isolationsschicht dasselbe Material verwendet wie für die Trägerschicht. Die Isolationsschicht kann auch derart gedruckt sein, dass die Zwischenräume zwischen den Leiterbahnen der Signalleiterstruktur mit dem dielektrischen Material der Isolationsschicht gefüllt sind.

Für die Abschirmungsschicht kommen grundsätzlich verschiedene anorganische Materialien (wie z.B. Metalle) und organische Materialien (wie z.B. leitfähige Polymere, Carbon, Graphit, Graphen etc.) oder Kombinationen davon in Betracht, sofern sie leitfähig sind.

Erfindungsgemäß enthält die Abschirmungsschicht eine gedruckte leitfähige, insbesondere metallische Abschirmungsstruktur. Für die Abschirmungsstruktur kommen grundsätzlich verschiedene anorganische Materialien (wie z.B. Metalle) und organische Materialien (wie z.B. leitfähige Polymere, Carbon, Graphit, Graphen etc.) oder Kombinationen davon in Betracht, sofern sie leitfähig sind und sich (z.B. als Tinte oder Paste) mittels Druckverfahren verarbeiten lassen. Vorzugsweise beträgt die Dicke der Abschirmungsstruktur 1 nm bis 50 µm. Auf diese Weise kann eine besonders kompakte Ausgestaltung des Signalleitungselements realisiert werden. Besonders bevorzugt beträgt die Dicke der Abschirmungsstruktur 500 nm bis 15 µm, so dass die Abschirmungsstruktur mittels bewährter Druckverfahren prozesssicher hergestellt werden kann. Vorzugsweise ist das Material der Abschirmungsstruktur identisch mit dem Material der zumindest einen Leiterbahn der Signalleitungsstruktur, was die Herstellung des Signalleitungselements vereinfacht.

In Abhängigkeit des jeweiligen Einsatzgebietes des Antriebsriemens und der erwarteten Störsignale haben sich diverse Abschirmungsgeometrien als besonders vorteilhaft erwiesen. In einer bevorzugten Ausgestaltung der Erfindung ist die Abschirmungsstruktur in zumindest einem Längsabschnitt des Signalleitungselements als vollflächige Schicht ausgebildet. In einer weiteren bevorzugten Ausgestaltung der Erfindung ist die Abschirmungsstruktur in zumindest einem Längsabschnitt des Signalleitungselements als flexibles Lochgitter mit einer Vielzahl von Löchern ausgebildet, insbesondere wobei die Löcher runde, elliptische oder polygone (insbesondere rechteckige, viereckige und/oder hexagonale) Formen aufweisen und/oder benachbarte Lochreihen zueinander versetzt angeordnet sind. Derartige Lochstrukturen lassen sich in einfacher Weise mittels bewährter Druckverfahren zuverlässig herstellen, was gegenüber einer vollflächigen Schicht die Kosten und das Gewicht des Signalübertragungselements senkt. Ferner kann durch Anpassung der Anordnung und der Größe der Löcher die Abschirmwirkung der Abschirmungsstruktur gezielt auf die abzuschirmenden Störsignale abgestimmt werden.

Für die Schutzschicht kommen grundsätzlich verschiedene Materialien in Betracht, sofern sie nicht leitfähig und ausreichend undurchlässig für z.B. Sauerstoff und/oder Feuchtigkeit sind. Vorzugsweise enthält das Material der Schutzschicht zumindest ein Polymer. Beispielsweise kann ein vernetzbarer oder Lösemittel-basierter Lack oder ein Folienlaminat, bestehend aus einer geeigneten Folie sowie einer Haftschicht (chemisch-vernetzbare Schicht oder PSA-Kleber), z.B. PET-Folie, als Schutzschicht verwendet werden. Eine Lackschicht kann hierbei besonders dünn und mittels Druckverfahren besonders effizient und prozesssicher realisiert werden. Vorzugsweise beträgt die Schichtdicke der Schutzschicht 100 nm bis 800 µm, bevorzugt 1 µm bis 100 µm, besonders bevorzugt 1 µm bis 10 µm. Bevorzugt wird für die Schutzschicht dasselbe Material verwendet wie für die Trägerschicht.

In einer bevorzugten Ausgestaltung der Erfindung weist die Leiterbahn zumindest eine elektrische Kontaktierungsstelle auf, die quer zur Schichtebene des Signalleiterelements freigelegt ist. In anderen Worten befindet sich oberhalb der Kontaktierungsstelle kein Material der Isolationsschicht, der Abschirmungsschicht und der ggf. vorhandenen Schutzschicht, was eine elektrische Kontaktierung des Signalleitungselements vereinfacht.

Gemäß dem bereits vor- sowie dem weiter unten Nachbeschriebenen wird die eingangs gestellte Aufgabe auch durch einen Linearantrieb mit den Merkmalen des Anspruchs 8 gelöst.

Gemäß dem bereits vor- sowie dem weiter unten nachbeschriebenen wird die eingangs gestellte Aufgabe auch durch eine Fördervorrichtung mit den Merkmalen des Anspruchs 9 gelöst.

Abwandlungen und Ausgestaltungen der Erfindung sowie weitere Vorteile und Einzelheiten der Erfindung lassen sich der nachfolgenden gegenständlichen Beschreibung und den Zeichnungen entnehmen. In den schematischen Figuren zeigen:
- Fig. 1: eine Ausführungsform des erfindungsgemäßen Antriebsriemens in einer Querschnittsansicht;
- Fig. 2: eine weitere Ausführungsform des Signalleitungselements in einer isometrischen Ansicht;
- Fig. 3: eine weitere Ausführungsform des Signalleitungselements gemäß Fig. 2 mit einer ersten Variante der Abschirmungsstruktur;
- Fig. 4: eine weitere Ausführungsform des Signalleitungselements gemäß Fig. 2 mit einer weiteren Variante der Abschirmungsstruktur;
- Fig. 5: eine weitere Ausführungsform des Signalleitungselements gemäß Fig. 2 mit einer weiteren Variante der Abschirmungsstruktur; und
- Fig. 6: eine weitere Ausführungsform des Signalleitungselements gemäß Fig. 2 mit einer weiteren Variante der Abschirmungsstruktur.

Gleich oder ähnlich wirkende Teile sind - sofern dienlich - mit identischen Bezugsziffern versehen.

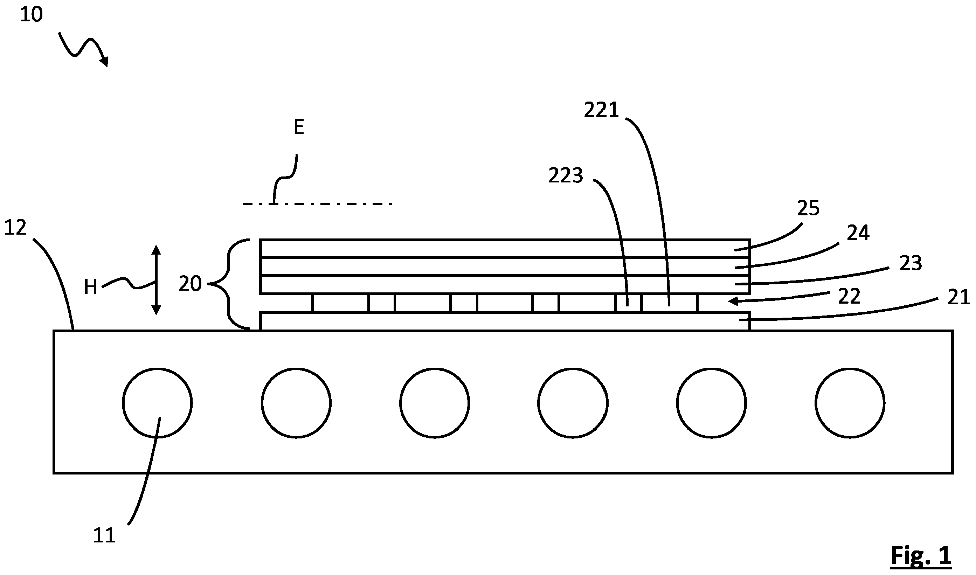

Fig. 1 zeigt eine Ausführungsform des erfindungsgemäßen Antriebsriemen 10 enthaltend ein polymeres Material mit darin eingebetteten und sich in Längsrichtung L des Riemens 10 erstreckenden Zugträgern 11. Die Längsrichtung L erstreckt sich hierbei quer zur Bildebene. Der Antriebsriemen 10 umfasst ein mehrschichtiges, streifenförmiges Signalleitungselement 20 zur Übertragung von Mess- und/oder Steuersignalen auf. Das Signalleitungselement 20 definiert eine gedachte Schichtebene E. **In** einer quer zur Schichtebene E verlaufenden Höhenrichtung H werden die jeweiligen (Schicht-)Dicken für die Schichten und Bestandteile des Signalleitungselements 20 gemessen. Das Signalleitungselement 20 ist lediglich zu Anschauungszwecken in Relation zum Riemen 10 deutlich größer dargestellt. Das Signalleitungselement 20 weist eine gedruckte Signalleiterstruktur 22 mit zumindest einer sich in Längsrichtung L des Riemens 10 erstreckenden, insbesondere metallischen Leiterbahn 221 auf. In der vorliegenden Ausführungsform ist die Signalleiterstruktur 22 auf einer an dem Riemenrücken 12 des Antriebsriemens 10 befestigten, insbesondere geklebten oder laminierten, flexiblen Trägerschicht 21 des Signalleitungselements 20 aufgedruckt. Alternativ kann die Signalleiterstruktur 22 auf dem Riemenrücken 12 des Antriebsriemens 10 aufgedruckt sein.

Das Signalleitungselement 20 weist ferner eine auf der gedruckten Signalleiterstruktur 22 angeordnete, insbesondere gedruckte Isolationsschicht 23 auf, die ein dielektrisches Material enthält. Auch die Zwischenräume 223 zwischen den Leiterbahnen 221 können mit dem dielektrischen Material der Isolationsschicht 23 gefüllt sind, was sich besonders einfach bei einer Herstellung der Isolationsschicht 23 mittels Druckverfahren realisieren lässt. Ferner weist das Signalleitungselement 20 eine auf der Isolationsschicht 23 angeordnete Abschirmungsschicht 24 enthaltend ein elektrisch leitfähiges Material auf. **In** der vorliegenden Ausführungsform weist das Signalleitungselement 20 eine auf der Abschirmungsschicht 24 angeordnete, insbesondere gedruckte Schutzschicht 25 auf.

Durch die gedruckte Signalleiterstruktur 22 kann mit dem Signalleitungselement 20 eine äußerst kompakte und robuste Signalleitung zur Übertragung von Mess- und/oder Steuersignalen z.B. zwischen dem bewegten Teil einer Fördervorrichtung und dem Antrieb bzw. der zentralen Steuerungseinrichtung der Fördervorrichtung realisiert werden, die unmittelbar in oder an dem Riemen 10 angeordnet werden kann. Durch die Abschirmungsschicht 24 können auf das System wirkende äußere Störsignale wirksam unterdrückt werden, wodurch eine zuverlässige Übertragung von Mess- und/oder Steuersignalen sichergestellt wird.

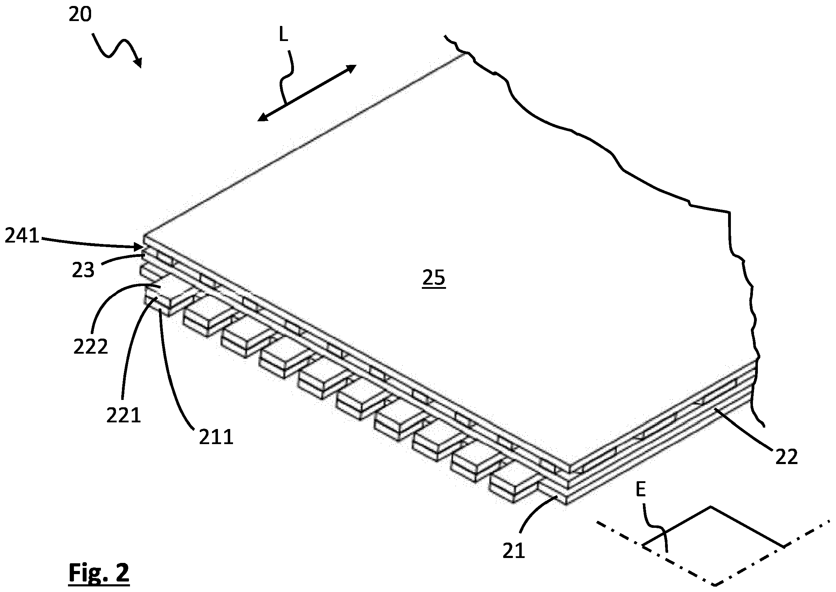

Fig. 2 zeigt eine weitere Ausführungsform des Signalleitungselements 20 in einer isometrischen Ansicht. Das Signalleitungselement 20 ist streifenförmig ausgebildet und erstreckt sich in Längsrichtung L des (hier nicht dargestellten) Riemens 10. Das Signalleitungselement 20 weist einen Aufbau in der folgenden Reihenfolge auf: Trägerschicht 21, Signalleiterstruktur 22, Isolationsschicht 23, Abschirmungsschicht 24, Schutzschicht. Das Signalleitungselement 20 kann mit der freien Seite der Trägerschicht 21 (analog zur Fig. 1) auf dem Riemen 10 befestigt werden.

Die Leiterbahnen 221 weisen jeweils eine elektrische Kontaktierungsstelle 222 auf, die quer zur Schichtebene E des Signalleitungselements 20 freigelegt ist, was die elektrische Kontaktierung erleichtert. Die Trägerschicht 21 kann Fortsätze 211 ausbilden, die die Kontaktierungsstellen 222 stützen.

Die Abschirmungsschicht 24 enthält eine gedruckte leitfähige, insbesondere metallische Abschirmungsstruktur 241. In Abhängigkeit des jeweiligen Einsatzgebietes des Antriebsriemens 10 und der erwarteten Störsignale haben sich diverse Abschirmungsgeometrien als besonders vorteilhaft erwiesen.

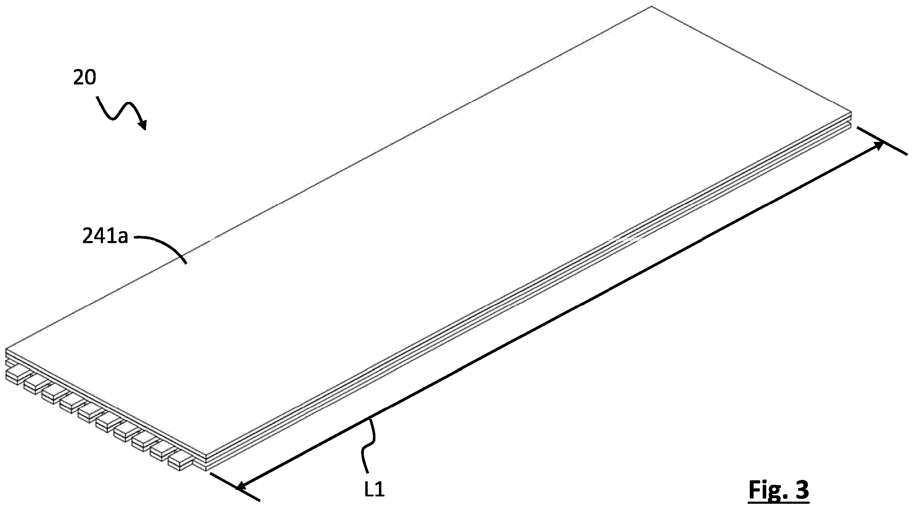

Fig. 3 zeigt eine weitere Ausführungsform des Signalleitungselements 20 gemäß Fig. 2 mit ausgeblendeter Schutzschicht 25, wobei die Abschirmungsstruktur 241 in zumindest einem Längsabschnitt L1 des Signalleitungselements 20 als vollflächige Schicht 241a ausgebildet ist.

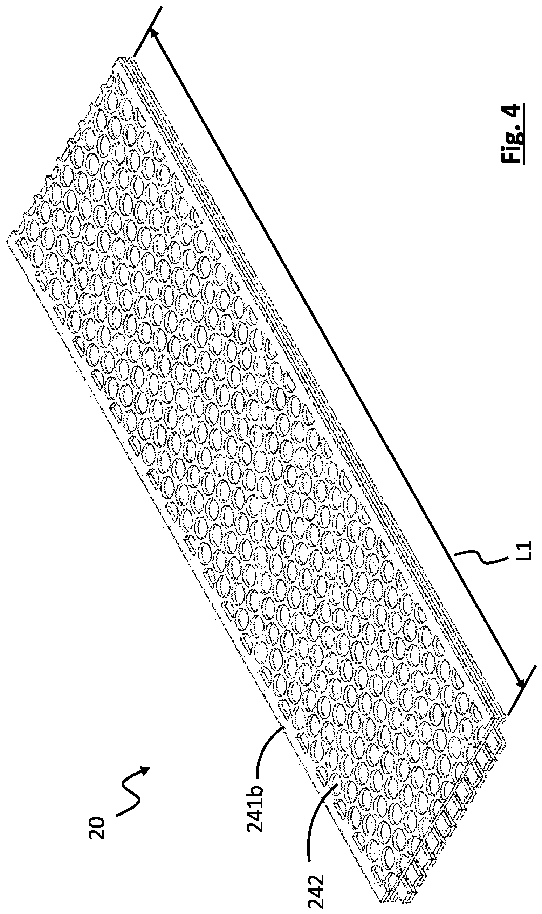

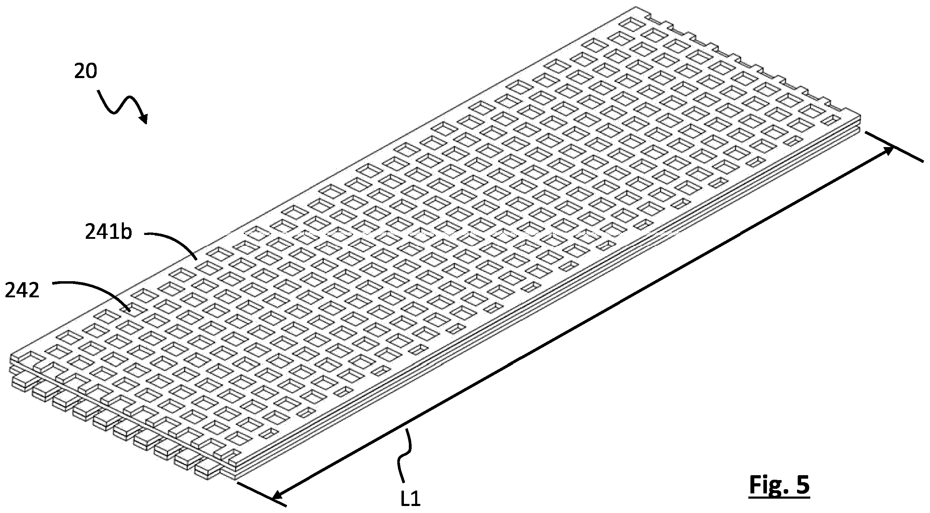

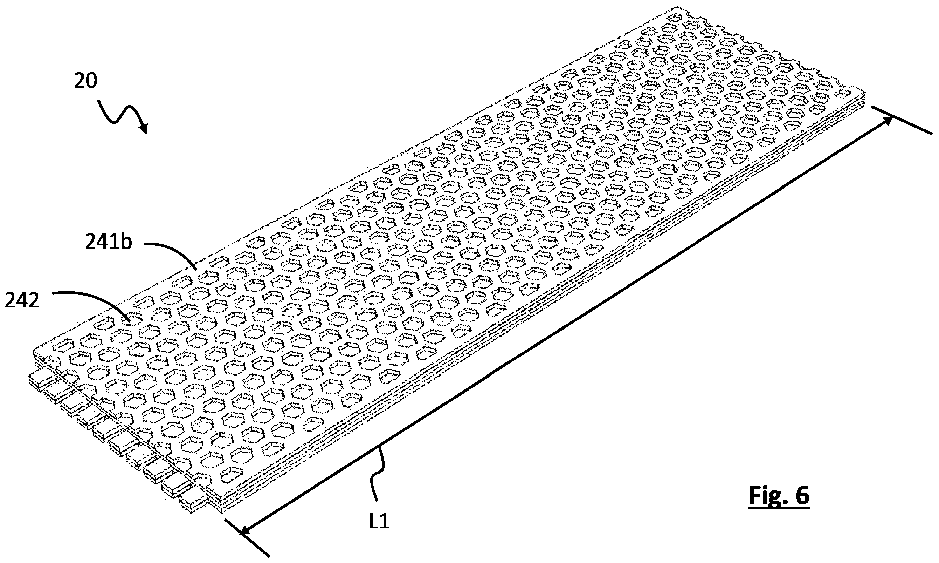

Fig. 4 bis 6 zeigen jeweils eine weitere Ausführungsform des Signalleitungselements 20 gemäß Fig. 2 mit ausgeblendeter Schutzschicht 25, wobei die Abschirmungsstruktur 241 in zumindest in einem Längsabschnitt L1 des Signalleitungselements 20 als flexibles Lochgitter 241b mit einer Vielzahl von Löchern 242 ausgebildet ist. Fig. 4 zeigt Löcher 242 mit einer runden Form. Fig. 5 zeigt Löcher 242 mit einer rechteckigen Form. Fig. 6 zeigt Löcher 242 mit einer hexagonalen Form. Derartige Lochstrukturen lassen sich in einfacher Weise mittels bewährter Druckverfahren zuverlässig herstellen, was z.B. gegenüber einer vollflächigen Schicht 241a die Kosten und das Gewicht des Signalübertragungselements 20 senkt. Ferner kann durch Anpassung der Anordnung und der Größe der Löcher 242 die Abschirmwirkung der Abschirmungsstruktur gezielt auf die abzuschirmenden Störsignale abgestimmt werden.

Ergänzend sei darauf hingewiesen, dass "aufweisend" keine anderen Elemente oder Schritte ausschließt und "ein" oder "eine" keine Vielzahl ausschließt.

Der Schutzbereich der vorliegenden Erfindung ist durch die Patentansprüche gegeben und wird durch die in der Beschreibung erläuterten oder den Figuren gezeigten Merkmale nicht beschränkt.

## Patentansprüche

1. Antriebsriemen (10) enthaltend ein polymeres Material insbesondere mit darin eingebetteten und sich in Längsrichtung des Riemens erstreckenden Zugträgern (11), aufweisend ein insbesondere streifenförmiges Signalleitungselement (20) mit
einer gedruckten Signalleiterstruktur (22), wobei die Signalleiterstruktur (22) zumindest eine sich in Längsrichtung des Riemens erstreckende, insbesondere metallische Leiterbahn (221) aufweist,
einer auf der gedruckten Signalleiterstruktur (22) angeordneten, insbesondere gedruckten Isolationsschicht (23) enthaltend ein dielektrisches Material,
**gekennzeichnet durch** eine auf der Isolationsschicht (23) angeordnete Abschirmungsschicht (24) enthaltend ein elektrisch leitfähiges Material, wobei die Abschirmungsschicht (24) eine gedruckte leitfähige Abschirmungsstruktur (241) enthält.

2. Antriebsriemen (10) nach Anspruch 1, wobei das Signalleitungselement (20) eine auf der Abschirmungsschicht (24) angeordnete, insbesondere gedruckte Schutzschicht (25) aufweist.

3. Antriebsriemen (10) nach Anspruch 1 oder 2, wobei die Signalleiterstruktur (22) auf dem Riemenrücken (12) des Antriebsriemens (10) aufgedruckt ist.

4. Antriebsriemen (10) nach Anspruch 1 oder 2, wobei die Signalleiterstruktur (22) auf einer an dem Riemenrücken (12) des Antriebsriemens (10) befestigten, insbesondere geklebten oder laminierten, flexiblen Trägerschicht (21) des Signalleitungselements (20) aufgedruckt ist.

5. Antriebsriemen (10) nach einem der vorangehenden Ansprüche, wobei die Abschirmungsstruktur (241) metallisch ist.

6. Antriebsriemen (10) nach Anspruch 5, wobei die Abschirmungsstruktur (241) in zumindest einem Längsabschnitt (L1) des Signalleitungselements (20) als vollflächige Schicht (241a) ausgebildet ist.

7. Antriebsriemen (10) nach einem der Ansprüche 5 oder 6, wobei die Abschirmungsstruktur (241) in zumindest in einem Längsabschnitt (L1) des Signalleitungselements (20) als flexibles Lochgitter (241b) mit einer Vielzahl von Löchern (242) ausgebildet ist.

8. Antriebsriemen (10) nach einem der vorangehenden Ansprüche, wobei die zumindest eine Leiterbahn (221) zumindest eine elektrische Kontaktierungsstelle (222) aufweist, die quer zur Schichtebene (E) des Signalleitungselements (20) freigelegt ist.

9. Linearantrieb mit einem Antriebsriemen (10) nach einem der vorangehenden Ansprüche.

10. Fördervorrichtung, insbesondere Regalbediengerät oder Aufzugsanlage, mit einem Linearantrieb nach Anspruch 9.

## Claims

1. Drive belt (10) containing a polymer material, in particular with tension members embedded therein and extending in the longitudinal direction of the belt (11), comprising in particular a strip-shaped signal line element (20) with
a printed signal conductor structure (22), wherein the signal conductor structure (22) has at least one longitudinal conductor (221) extending in the longitudinal direction of the belt, in particular a metallic conductor track (221),
an insulation layer (23) arranged on the printed signal conductor structure (22), in particular a printed one containing a dielectric material,
**characterized by** a shielding layer (24) arranged on the insulation layer (23) containing an electrically conductive material, wherein the shielding layer (24) contains a printed conductive shielding structure (241).

2. Drive belt (10) according to claim 1, wherein the signal line member (20) comprises a protective layer (25) arranged on the shielding layer (24), in particular printed.

3. Drive belt (10) according to claim 1 or 2, wherein the signal conductor structure (22) is printed on the belt back (12) of the drive belt (10).

4. A drive belt (10) according to claim 1 or 2, wherein the signal conductor structure (22) is printed on a flexible carrier layer (21) of the signal line member (20) attached to the belt back (12) of the drive belt (10), in particular glued or laminated.

5. Drive belt (10) according to any of the preceding claims, wherein the shielding structure (241) is metallic.

6. Drive belt (10) according to claim 5, wherein the shielding structure (241) is formed as a full-surface layer (241a) in at least one longitudinal portion (L1) of the signal line element (20).

7. Drive belt (10) according to any one of claims 5 or 6, wherein the shielding structure (241) is formed in at least in one longitudinal portion (L1) of the signal line member (20) as a flexible perforated grid (241b) with a plurality of holes (242).

8. Drive belt (10) according to any one of the preceding claims, wherein the at least one conductor track (221) has at least one electrical contact point (222) exposed transversely to the layer plane (E) of the signal line element (20).

9. Linear actuator with a drive belt (10) according to any of the preceding requirements.

10. A conveyor device, in particular a storage and retrieval machine or elevator system, with a linear actuator according to claim 9.

## Revendications

1. Courroie d'entraînement (10) contenant un matériau polymère, en particulier avec des éléments de tension intégrés dans celui-ci et s'étendant dans le sens longitudinal de la courroie (11), comprenant en particulier un élément de ligne de signal en forme de bande (20) avec
une structure de conducteur de signal imprimé (22), dans laquelle la structure de conducteur de signal (22) comporte au moins un conducteur longitudinal (221) s'étendant dans la direction longitudinale de la courroie, en particulier un rail conducteur métallique (221),
une couche isolante (23) disposée sur la structure conductrice du signal imprimé (22), en particulier une couche imprimée contenant un matériau diélectrique,
**caractérisée par** une couche de blindage (24) disposée sur la couche isolante (23) contenant un matériau électriquement conducteur, la couche de blindage (24) contenant une structure de blindage conductrice imprimée (241).

2. Courroie d'entraînement (10) selon la revendication 1, dans laquelle l'élément de ligne de signal (20) comprend une couche protectrice (25) disposée sur la couche de blindage (24), en particulier imprimée.

3. Courroie d'entraînement (10) selon la revendication 1 ou 2, dans laquelle la structure conductrice de signal (22) est imprimée sur le dos de la courroie (12) de la courroie d'entraînement (10).

4. Courroie d'entraînement (10) selon la revendication 1 ou 2, dans laquelle la structure conductrice de signal (22) est imprimée sur une couche porteuse flexible (21) de l'élément de ligne de signal (20) fixée à l'arrière de la courroie d'entraînement (12) de la courroie d'entraînement (10), en particulier collée ou stratifiée.

5. Courroie d'entraînement (10) selon l'une quelconque des revendications précédentes, dans laquelle la structure de blindage (241) est métallique.

6. Courroie d'entraînement (10) selon la revendication 5, dans laquelle la structure de blindage (241) est formée comme une couche de surface complète (241a) dans au moins une partie longitudinale (L1) de l'élément de ligne de signal (20).

7. Courroie d'entraînement (10) selon l'une quelconque des revendications 5 ou 6, dans laquelle la structure de blindage (241) est formée dans au moins une partie longitudinale (L1) de l'élément de ligne de signal (20) sous la forme d'une grille perforée flexible (241b) avec une pluralité de trous (242).

8. Courroie d'entraînement (10) selon l'une quelconque des revendications précédentes, dans laquelle la ou les pistes conductrices (221) ont au moins un point de contact électrique (222) exposé transversalement au plan de couche (E) de l'élément de ligne de signal (20).

9. Actionneur linéaire avec courroie d'entraînement (10) selon l'une des exigences précédentes.

10. Dispositif de convoyage, en particulier une machine de stockage et de déstockage ou un système d'ascenseur, avec un actionneur linéaire selon la revendication 9.
